# EUROPEAN PATENT SPECIFICATION

(11) **EP 2 813 297 B1**
(45) Date of publication and mention of the grant of the patent: **19.07.2017**
(21) Application number: 13746504.3
(22) Date of filing: 05.02.2013
(51) Int. Cl.: B09B 3/00, C02F 1/58, C02F 1/62, C02F 1/64, C03C 15/00, C22B 3/04, C22B 5/10, C22B 7/00, C22B 9/10, C22B 13/00, C22B 13/02, C03C 3/102

(54) **METHOD FOR SEPARATING HEAVY METAL FROM GLASS**
VERFAHREN ZUR ABTRENNUNG VON SCHWERMETALLEN AUS GLAS
PROCÉDÉ DE SÉPARATION DE MÉTAL LOURD D'UN VERRE

(30) Priority: 06.02.2012 JP 2012023170
(43) Date of publication of application: 17.12.2014
(73) Proprietor: Tottori Prefecture, Tottori 680-8570 (JP)
(72) Inventor: MONGI, Hideyuki, Tohaku-gun Tottori 682-0704 (JP); NARUOKA, Tomohiro, Tohaku-gun Tottori 682-0704 (JP); IGURA, Takeshi, Tohaku-gun Tottori 682-0704 (JP)
(74) Representative: Gulde & Partner
(86) International application number: PCT/JP2013/052538
(87) International publication number: WO 2013/118695

(56) References cited:
- EP-A1- 1 440 951
- JP-A- H0 796 264
- JP-A- H0 796 264
- JP-A- S5 491 966
- JP-A- H11 156 180
- JP-A- 2006 511 718
- JP-A- 2008 200 563
- JP-A- 2011 235 230

## Description

### TECHNICAL FIELD

The present invention relates to a method for separating heavy metals from glass. In one example, the present invention is utilized in separating lead from lead-glass used in the funnel portion of a cathode ray tube (hereinafter referred to as CRT).

### BACKGROUND ART

Glass used in the funnel portion of a CRT (funnel glass) contains lead at a high concentration. Conventionally, when the CRT is discarded, the funnel glass is recycled as a funnel glass for a new CRT. However, in recent years, thin-screen television has become popular, leading to decrease in the manufacture of CRTs. Therefore, it has become difficult to utilize the funnel glass as a funnel glass for new CRTs, and thus a new method for discarding the funnel glass is in need.

As described, since the funnel glass contains lead at a high concentration, it cannot be disposed by landfill as it is. In addition, it is not easy to utilize the funnel glass as a building material and the like. Accordingly, a technique to remove lead from the funnel glass is desired.

As a technique to remove lead from the funnel glass, Patent Document 1 discloses a technique which melts lead-glass and a reducing agent, thereby reducing the lead oxide to allow collection of the lead as a metallic lead (melting reduction process).

As another technique to remove lead from the funnel glass, Patent Document 2 discloses a phase-separation method. In this method, the waste glass melted with boron oxide, thereby forming a glass with a split phase of silicon oxide phase and boron oxide phase. This allows condensation of impurities such as chromium and cobalt into the boron oxide phase. The impurities can be removed from the waste glass by leaching (extracting) the boron oxide phase with acid.

### PRIOR ART REFERENCE

### PATENT DOCUMENT

Patent Document 1: JP-A-7-96264
Patent Document 2: WO2003/024879

### SUMMARY OF THE INVENTION

### PROBLEMS TO BE SOLVED BY THE INVENTION

The method described in Patent Document 1 is advantageous in that metallic lead with extra value can be collected, however, the glass after the collection of metallic lead contains residual lead at the level of several thousand ppm. Therefore, the glass still cannot be disposed by landfill.

The method described in Patent Document 2 is advantageous in that the impurities can be removed efficiently, however, this method requires the use of abundant acid. Therefore, the size of the plant for extraction becomes large, and thus the cost for treating waste glass increases.

As mentioned, both of the conventional techniques are unsatisfactory. Therefore, an efficient and low-cost method for separating lead from funnel glass has been desired.

In addition, in addition to the funnel glass, there are many waste glass containing various heavy metals. Therefore, a method for separating heavy metals from such waste glass has been desired.

The present invention has been made in view of such circumstances, and the object of the present invention is to provide an efficient and low-cost method for separating heavy metals from glass.

### MEANS FOR SOLVING THE PROBLEMS

According to the present invention, a method for separating heavy metal from glass, comprising: a reduction-phase-separation step for melting glass containing a heavy metal oxide and silica, together with a reducing agent and a phase-separation reagent which is a boron source or a phosphorus source, thereby reducing the heavy metal oxide and forming a glass phase comprising a silica phase and a secondary phase having a higher solubility with respect to an acid solution compared with the silica phase; a heavy metal collecting step for separating and collecting a heavy metal obtained by reducing the heavy metal oxide from the glass phase; and an acid extraction step for dissolving the secondary phase with a residual heavy metal in an acid solution by allowing the glass phase to come in contact with the acid solution, is provided.

The present invention has been made in the course of separating lead from lead-glass. The present inventors have been pursuing the research to detoxify glass by extracting lead from the glass using the phase-separation method. During the research, the inventors have found that the use of phase-separation method is advantageous in that it can reduce the level of lead concentration of the glass after extraction to a very low degree. However, it is troublesome since abundant acid is necessary for extracting lead, and the size of the plant for extraction becomes unrealistically large. In addition, the lead dissolved in acid is low in value, and a reducing process such as electrolyzation and refining is necessary to convert this lead into metallic lead. Accordingly, it has an disadvantage due to heavy burden and the necessity of large energy.

In view of such circumstances, the inventors have arrived at a reduction-phase-separation method, a phase-separation method in which a reducing agent such as carbon is added during the process of melting lead-glass and boron. In this method, the lead oxide is reduced to metallic lead by the function of the reducing agent, and the glass phase is separated into the silica phase and the boron oxide phase, thereby enabling extraction of the remaining lead into the acid solution along with the boron oxide. In this method, a large portion of the lead oxide is reduced to metallic lead at the first melting step, and thus only a small amount of lead remains in the boron oxide phase. The amount of acid necessary for dissolving the lead and the burden and the energy required for reducing the lead dissolved in acid would vary depending on the amount of residual lead. Therefore, when this reduction-phase-separation method is used, the amount of acid necessary for dissolving the lead and the burden and the energy required for the following reducing step can be cut down by a large extent. In addition, when this reduction-phase-separation method is used, the afore-mentioned advantage of the phase-separation method can be obtained.

Accordingly, the present inventors have conducted further research, and found that the reduction-phase-separation method of the present invention can be applied for separating various heavy metals from glass, thereby completing the present invention.

Hereinafter, the present invention will be described with reference to various embodiments. The following embodiments can be combined with each other.

Preferably, the heavy metal is at least one metal selected from the group consisting of lead, cadmium, chromium, arsenic, selenium, zinc, copper, iron, manganese, and nickel.

As already mentioned the phase-separation reagent is a boron source or a phosphorus source.

Preferably, the reducing agent is carbon.

Preferably, the melting is conducted in the presence of at least one of alkali metal and alkali earth metal.

Preferably, the method further comprises a step of collecting a heavy metal ion contained in the acid solution after the acid extraction step from the acid solution.

Preferably, the method further comprises the step of collecting a boron compound or a phosphorus compound from the acid solution after the extraction step by precipitation of the boron compound or the phosphorus compound.

Preferably, the boron compound or the phosphorus compound is collected by the precipitation.

### BRIF DESCRIPTION OF THE DRAWINGS

FIG. 1 is a flowchart showing the procedure of the demonstration experiment of the reduction-phase-separation method with respect to an Example of the present invention.
FIG. 2 shows the result of Experiment No. 1 with respect to an Example of the present invention.
FIG. 3 shows the result of Experiment No. 2 with respect to an Example of the present invention.
FIG. 4 shows the result of Experiment No. 3 with respect to an Example of the present invention.
FIG. 5 shows the result of Experiment No. 4 with respect to an Example of the present invention.

### DESCRIPTION OF THE PREFERRED EMBODIMENTS

Hereinafter, the embodiment of the present invention will be described.

According to one embodiment of the present invention, a method for separating heavy metal from glass comprises: a reduction-phase-separation step for melting glass containing a heavy metal oxide and silica, together with a reducing agent and a phase-separation reagent which is a boron source or a phosphorus source, thereby reducing the heavy metal oxide and forming a glass phase comprising a silica phase and a secondary phase having a higher solubility with respect to an acid solution compared with the silica phase; a heavy metal collecting step for separating and collecting a heavy metal obtained by reducing the heavy metal oxide from the glass phase; and an acid extraction step for dissolving the secondary phase with a residual heavy metal in an acid solution by allowing the glass phase to come in contact with the acid solution.

Hereinafter, each of the steps will be described in detail.

### 1. Reduction-Phase-separation Step

In the reduction-phase-separation step, the glass containing the heavy metal oxide and silica is melted with a reducing agent and a phase-separation reagent which is a boron source or a phosphorus source.

The present embodiment mainly focuses on a funnel glass of the CRT described in the Background Art. The object of the present embodiment is to collect metallic lead from this funnel glass, and to detoxify the funnel glass. Here, the present embodiment is intended not only for the funnel glass, but also the lead-glasses of other origin and type. In addition, the present embodiment is intended not only for lead, but also various heavy metals. It is necessary to separate such heavy metals from the viewpoint of preventing environmental pollution, securing of resources, and the like. The present embodiment intends to collect heavy metals which exist in the glass as an oxide and can be separated as the metal by reduction, and which tends to be contained in the boron oxide phase or the phosphorus oxide phase rather than the silica phase. Specifically, examples of the heavy metals are lead, cadmium, chromium, arsenicum, serene, zinc, copper, iron, manganese, nickel, and the like.

The content of silica (SiO₂) in the glass is not particularly limited, and is 30 to 99 mass% for example. Specifically, for example, the content is 30, 35, 40, 45, 50, 55, 60, 65, 70, 75, 80, 85, 90, 95, or 99 mass%. The content may be within the range of the two values selected from these exemplified values. The content of the heavy metal in the glass by oxide conversion (when the heavy metal is lead, by PbO) is, for example, 0.02 to 50 mass%. Specifically, for example, the content is 0.02, 0.05, 0.1, 0.5, 1, 5, 10, 15, 20, 25, 30, 40, or 50 mass%. The content may be within the range of the two values selected from these exemplified values.

The type of the reducing agent is not particularly limited so long as it can reduce the heavy metal oxide in the glass. For example, it is powder carbon (example : black lead). The amount of the carbon added shall be sufficient to reduce the heavy metal oxide. The mass ratio of the reducing agent against the heavy metal oxide (example : mass ratio of C/PbO) is 0.02 to 1. Specifically, for example, the ratio is 0.02, 0.05, 0.1, 0.2, 0.3, 0.4, 0.5, 0.6, 0.7, 0.8, 0.9, or 1. The ratio may be within the range of the two values selected from these exemplified values. When expressed in a different way, the mass ratio of the reducing agent against the glass (example : mass ratio of C/entire Pb glass) is 0.005 to 0.2. Specifically, the ratio is 0.005, 0.01, 0.05, 0.1, 0.15, or 0.2. The ratio may be within the range of the two values selected from these exemplified values. When the added amount of carbon is too small, the reduction of the heavy metal oxide tends to be incomplete. When the amount is too large, the unreacted carbon would become a waste. In addition, if the residual carbon ash exists, it would bring black glass and carbon ashes. This would cause defect in the following extraction step, thereby resulting in defect in the acid extraction step.

The phase-separation reagent is added to form a secondary phase in the glass phase, having higher solubility with respect to the acid solution compared with the silica phase. The phase-separation reagent is a boron source or a phosphorus source. In such case, the secondary phases are boron oxide phase and phosphorus oxide phase, respectively. As the boron source, boron oxide (B₂O₃), boric acid (H₃BO₃), sodium tetraborate (Na₂B₄O₇) and the like can be mentioned for example. As the phosphorus source, phosphorus pentoxide (P₂O₅), phosphoric acid (H₃PO₄), sodium phosphate (Na₃PO₄) and the like can be mentioned for example. The addition amount of the phase-separation reagent (the boron source or phosphorus source) shall be sufficient to separate the heavy metal by phase-separation. The mass ratio of the phase-separation reagent (the boron source or phosphorus source) against the heavy metal oxide by oxide conversion (example : mass ratio of B₂O₃/PbO) is, for example, 0.05 to 1. Specifically, the ratio is 0.05, 0.1, 0.2, 0.3, 0.4, 0.5, 0.6, 0.7, 0.8, 0.9, or 1. The ratio may be within the range of the two values selected from these exemplified values. When expressed in a different way, the mass ratio of the phase-separation reagent (the boron source or phosphorus source) against the glass by oxide conversion (example : mass ratio of B₂O₃/entire Pb glass) is 0.01 to 0.2. Specifically, the ratio is 0.01, 0.02, 0.05, 0.1, 0.15, or 0.2. The ratio may be within the range of the two values selected from these exemplified values. When the added amount of the phase-separation reagent (the boron source or phosphorus source) is too small, the phase-separation tends to be incomplete. When the amount is too large, the amount of silica extracted in the acid extraction step increases.

The reducing agent and the phase-separation reagent (the boron source or phosphorus source) may be added simultaneously, or may be added separately. That is, the glass, reducing agent, and the phase-separation reagent (the boron source or phosphorus source) may be melted simultaneously, or the phase-separation reagent (the boron source or phosphorus source) may be added after melting the glass and the reducing agent. The melting in the reduction-phase-separation step may be carried out in either way.

It is preferable to carry out the melting by crushing the glass into powder glass, and then blending the powder glass with the reducing agent and the phase-separation reagent (the boron source or phosphorus source). In this manner, the reducing agent and the phase-separation reagent (the boron source or phosphorus source) would function appropriately, and the reduction of the heavy metal oxide and the phase-separation of the glass phase would proceed appropriately. The melting temperature is 900 to 1300 °C for example. When the melting temperature is too low, the viscosity of the glass would not be low enough, and thus separation of the reduced heavy metal may become difficult. When the melting temperature is too high, the energy consumption would become large. The melting time is 0.2 to 5 hours for example. When the melting time is too short, problems such as those caused by residual reducing agent tends to occur. When the melting time is too long, the energy consumption would become large.

The glass powder can be prepared by using a ball mill or a commercially available vibrating mill and the like. The particle diameter of the glass powder is less than 500µm for example. Here, in the present specification, "the particle diameter is less than Xµm" means that the particle can go through a mesh of Xµm mesh.

In addition, it is preferable to carry out the melting in the presence of at least one of alkali metal (example : Na, K), alkali-earth metal (example : Ca), and Mg. Hereinafter, the alkali metal and the alkali-earth metal, and Mg are collectively referred to as "alkali (earth) metal". Since the alkali (earth) metal decreases the viscosity of the glass, the reduced heavy metal can be separated easily when the melting is carried out in the presence of the alkali (earth) metal (that is, the reduced metal can easily be collected at the bottom of the container). In addition, it would allow to decrease the melting temperature, resulting in reduction of the energy consumption. The alkali (earth) metal may be contained in the glass raw material, or may be added. The content of the alkali (earth) metal shall be adjusted so that the viscosity of the glass during melting is appropriate. For example, the mass ratio of the alkali (earth) metal against the heavy metal oxide by oxide conversion (example : mass ratio of (Na₂O + K₂O)/PbO) is, for example, 0.5 to 4. Specifically, the ratio is 0.5, 1, 1.5, 2, 2.5, 3, 3.5, or 4. The ratio may be within the range of the two values selected from these exemplified values. When expressed in a different way, the mass ratio of the alkali (earth) metal against the glass by oxide conversion (example : mass ratio of (Na₂O + K₂O)/entire Pb glass) is 0.1 to 1. Specifically, the ratio is 0.1, 0.2, 0.3, 0.4, 0.5, 0.6, 0.7, 0.8, 0.9, or 1. The ratio may be within the range of the two values selected from these exemplified values. When the content of the alkali (earth) metal is too small, it becomes difficult to separate the reduced heavy metal. When the content is too large, the amount of silica extracted increases.

### 2. Heavy Metal Collecting Step

In the heavy metal collecting step, the heavy metal obtained by reduction is separated from the glass phase and is then collected. Since the specific gravity of the heavy metal is larger than the glass, the heavy metal would gather at the bottom of the crucible or the furnace by the gravity if the viscosity of the glass phase is kept low. In such way, the heavy metal can be collected easily. As described, the present embodiment differs from the conventional phase-separation method in the point that a large part of the heavy metal in the glass is reduced when the melted glass is solidified, thereby eliminating the additional reducing step such as refining. Accordingly, burden and energy consumption can be reduced.

### 3. Acid Extraction Step

When the glass phase is cooled after melting in the afore-mentioned step, the glass phase splits into a silica phase and a secondary phase (boron oxide phase or phosphorus oxide phase) having a higher solubility with respect to the acid solution compared with the silica phase. The heavy metal contained in the glass (residual heavy metal) exists in the secondary phase.

In the acid extraction step, the glass phase is allowed to come into contact with the acid solution, thereby causing the secondary phase to dissolve in the acid solution with the residual heavy metal. In such manner, the residual heavy metal is removed. The type of the acid solution is not particularly limited so log as it can dissolve the secondary phase and the residual heavy metal, and does not dissolve the silica phase. For example, the acid solution may be nitric acid, hydrochloric acid, or organic acid (citric acid and the like) . The strength of the acid is, for example, 1 to 5 N. The amount of the acid is adjusted in accordance with the solubility of the secondary phase and the residual heavy metal. The amount is, for example, 1 to 100ml with respect to 1g of the glass phase.

The method for allowing the glass phase to come into contact with the acid solution is not particularly limited. The glass phase may be immersed in the acid solution without crushing the glass, or may be crushed into a glass powder before immersion. The glass phase may be agitated, stirred, and the like when immersed in the acid solution. The time for immersing the glass phase shall be adjusted in accordance with the strength of the acid solution, composition of the glass, and the like. For example, the time for immersing is 6 to 36 hours. When the time for immersing is too short, the secondary phase would not fully dissolve. When the time for immersing is too long, the amount of silica phase dissolved in the acid solution would increase. The temperature of the acid solution is not particularly limited, and may be at room temperature, or the acid solution may be heated.

When solid-liquid separation is carried out by filtration after allowing the glass phase to come into contact with the acid solution, the system is separated into the glass phase having only the silica phase, and the extraction solution having dissolved therein the secondary phase and the residual heavy metal. The residual heavy metal dissolved in the extraction solution can be collected from the liquid by electrolysis, neutralization, adsorption and the like. In the conventional phase-separation method, all of the heavy metals contained in the glass would dissolve in the extraction solution, and thus heavy burden and large energy consumption were required in the collecting step. On the contrary, in the present embodiment, a large portion of the heavy metal is already collected as metal, and thus the burden and the energy consumption in the collecting step are reduced dramatically compared with the conventional method.

In addition, the boron compound or the phosphorus compound can be collected by crystallization. The collected boron compound or the phosphorus compound can be re-used as the phase-separation reagent. When conducting the crystallization, the acid solution is heated to 70 to 90 °C for example, and is allowed to come into contact with the glass phase. When the acid solution is allowed to come into contact with the glass phase at such high temperature and then cooled, the boron compound or the phosphorus compound would crystallize due to the temperature-dependence of the solubility. Then, the boron compound or the phosphorus compound is collected by filtration and the like.

After the residual heavy metal and the boron compound or the phosphorus compound are collected from the extraction solution, the extraction solution can be re-used as the acid solution in the acid extracting step. Accordingly, the present embodiment can reduce the amount of waste by a large extent.

### EXAMPLES

Hereinafter, the Examples of the present invention will be described.

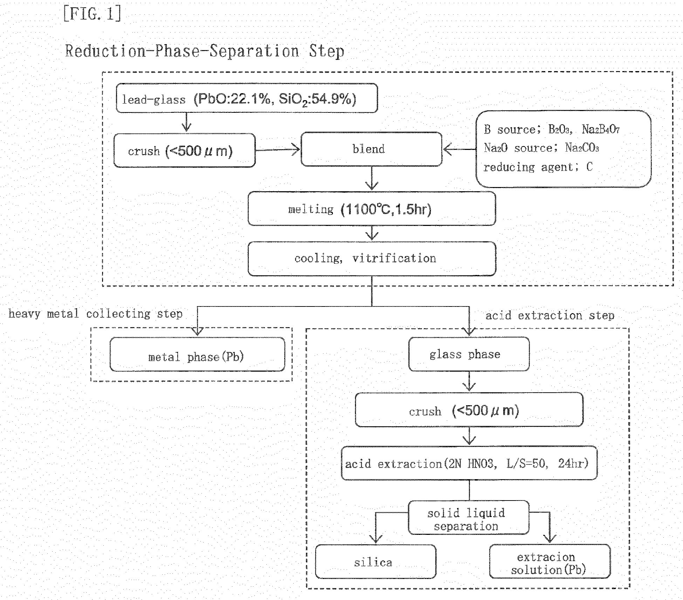

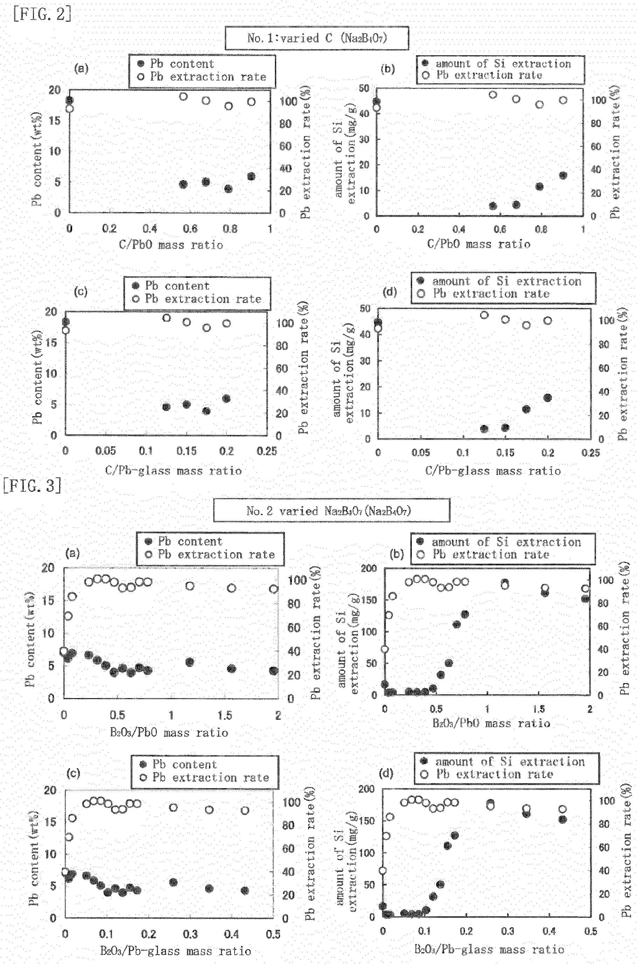

Demonstration experiment of the reduction-phase-separation method was conducted in accordance with the various conditions shown in Table 1, by the procedures shown in the flowchart of FIG. 1. In Table 1, the amount of the component referred to as "varied" was varied, to obtain the graphs shown in FIGs 2 to 5.

Specifically, the lead glass (PbO : 22.1%, SiO₂ : 54.9%) was crushed, filtered through a sifter of 500 µm mesh to give a lead-glass powder (8g). The lead-glass powder was blended with a boron source, Na₂O source (Na₂CO₃), and a reducing agent (carbon), followed by melting at 1100°C for 1.5 hours. Subsequently, the molten glass was cooled for vitrification (reduction-phase-separation step).

Then, the metal phase of lead formed at the bottom of the crucible was collected (heavy metal collecting step).

Then, the glass phase after the collection of the metal phase was crushed, filtered through a sifter of 500 µm mesh to give a glass powder. The lead content of the glass powder was measured by ICP-AES method. 2N nitric acid was added to the glass powder, at the rate of 50 ml of nitric acid per 1g of glass powder. The mixture was then stirred for 24 hours. Subsequently, the mixture was filtered to separate the solids from liquids, to give the undissolved silica phase and the extraction solution. The Pb concentration and the Si concentration of the extraction solution was measured by IP-AES method (acid extraction step).

**[Table 1]**

| Example No. | Boron Source | | Na₂O Source | | Reducing Agent | |
|---|---|---|---|---|---|---|
| | Type | mass (g) | Type | mass (g) | Type | mass (g) |
| 1 | Na₂B₄O₇ | 1 | Na₂CO₃ | 1.71 | C | varied |
| 2 | Na₂B₄O₇ | varied | Na₂CO₃ | 1.71 | C | 1.2 |
| 3 | B₂O₃ | 1 | Na₂CO₃ | 1.71 | C | varied |
| 4 | B₂O₃ | varied | Na₂CO₃ | 1.71 | C | 1.2 |

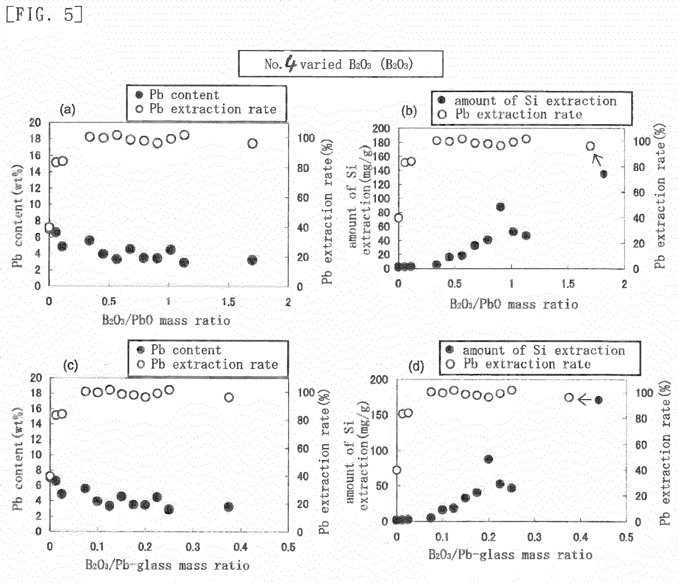

The results obtained are shown in FIG. 2 to FIG. 5. In each of the figures, (a) and (b) are represented by mass ratio against PbO, and (c) and (d) are represented by mass ratio against the entire lead glass. Here, in each of the figures, Pb content refers to the content of Pb remaining in the glass phase after the heavy metal collecting step, Pb extraction rate (%) refers to (Pb content of extraction solution)/(Pb content of glass phase before extraction), and amount of Si extraction refers to (Si content of extraction solution (mg))/(mass of glass phase used in the extraction (g)). In FIGs 3, and 5, the horizontal axis is given by the mass ratio by oxide conversion.

FIGs. 2 (a) to (d) show the results of Example No. 1. The carbon added in the mixture reduces PbO contained in the lead-glass, allowing the metal to precipitate. Therefore, the Pb concentration was reduced to approximately 4%. When Na₂B₄O₇ was used as the boron source, it was possible to separate the precipitate of the reduced PbO.

FIGs. 3 (a) to (d) show the results of Example No. 2. When boron was not added, the Pb extraction rate was approximately 40%, however, the Pb extraction rate increased as the amount of boron added increased, thereby achieving quantitative extraction of Pb. When the amount of boron added is too large, the extraction rate of Si also increased. There was a region in which Pb can be selectively extracted from the glass.

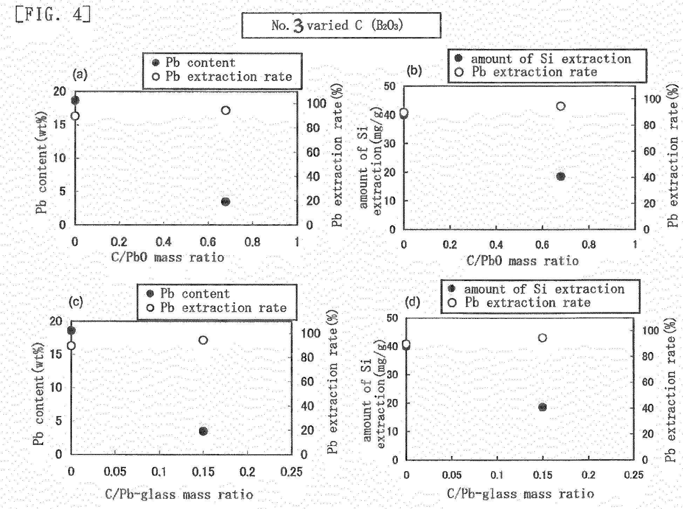

FIGs. 4 (a) to (d) show the results of Example No. 3. By adding carbon, PbO contained in the lead-glass precipitates as metal. Therefore, the Pb concentration was reduced to approximately 4%. When B₂O₃ was used as the boron source, it was also possible to separate the precipitate of the reduced PbO.

FIGs. 5 (a) to (d) show the results of Example No. 4. By adding boron, Pb concentration of the glass decreased. When boron was not added, the Pb extraction rate was approximately 40%, however, the Pb extraction rate increased as the amount of boron added increased, thereby achieving quantitative extraction of Pb. When the amount of boron added is too large, the extraction rate of Si also increased. There was a region in which Pb can be selectively extracted from the glass.

As described, in either one of the Examples 1 to 4, Pb concentration of glass was reduced by melting appropriate amount of carbon and boron with the glass to precipitate PbO contained in the glass as metal. In addition, the residual Pb in glass can be extracted with acid extraction by almost 100%.

## Claims

1. A method for separating heavy metal from glass, comprising:
a reduction-phase-separation step for melting glass containing a heavy metal oxide and silica, together with a reducing agent and a phase-separation reagent which is a boron source or a phosphorus source, thereby reducing the heavy metal oxide and forming a glass phase comprising a silica phase and a secondary phase having a higher solubility with respect to an acid solution compared with the silica phase;
a heavy metal collecting step for separating and collecting a heavy metal obtained by reducing the heavy metal oxide from the glass phase; and
an acid extraction step for dissolving the secondary phase with a residual heavy metal in an acid solution by allowing the glass phase to come in contact with the acid solution.

2. The method of Claim 1, wherein the heavy metal is at least one metal selected from the group consisting of lead, cadmium, chromium, arsenic, selenium, zinc, copper, iron, manganese, and nickel.

3. The method of any one of Claims 1 or 2, wherein the reducing agent is carbon.

4. The method of any one of Claims 1 to 3, wherein the melting is conducted in the presence of at least one of alkali metal and alkali earth metal.

5. The method of any one of Claims 1 to 4, further comprising a step of:
collecting a heavy metal ion contained in the acid solution after the acid extraction step from the acid

6. The method of any one of Claims 1 to 5 comprising the step of:
collecting the boron compound or the phosphorus compound from the acid solution after the extraction step by precipitation of the boron compound or the phosphorus compound.

7. The method of Claim 6, wherein the boron compound or the phosphorus compound is collected by precipitation.

## Patentansprüche

1. Verfahren zur Abtrennung von Schwermetallen aus Glas, umfassend:
einen Schritt der Reduktion und Phasentrennung zum Schmelzen von Glas, das ein Schwermetalloxid und Siliciumdioxid enthält, zusammen mit einem Reduktionsmittel und einem Reagens zur Phasentrennung, das eine Borquelle oder eine Phosphorquelle ist, wodurch das Schwermetalloxid reduziert wird und eine Glasphase gebildet wird, die eine Siliciumdioxidphase und eine sekundäre Phase mit einer höheren Löslichkeit bezüglich einer Säurelösung im Vergleich zu der Siliciumdioxidphase umfasst;
einen Schritt der Schwermetallansammlung zum Abtrennen und Ansammeln eines durch Reduzieren des Schwermetalloxids erhaltenen Schwermetalls aus der Glasphase; und
einen Schritt der Extraktion mit Säure zum Lösen der sekundären Phase mit restlichem Schwermetall in einer Säurelösung, indem ermöglicht wird, dass die Glasphase mit der Säurelösung in Kontakt kommt.

2. Verfahren nach Anspruch 1, wobei das Schwermetall mindestens ein Metall, ausgewählt aus der Gruppe bestehend aus Blei, Cadmium, Chrom, Arsen, Selen, Zink, Kupfer, Eisen, Mangan und Nickel, ist.

3. Verfahren nach einem der Ansprüche 1 oder 2, wobei das Reduktionsmittel Kohlenstoff ist.

4. Verfahren nach einem der Ansprüche 1 bis 3, wobei das Schmelzen in Gegenwart von mindestens einem Alkalimetall und Erdalkalimetall durchgeführt wird.

5. Verfahren nach einem der Ansprüche 1 bis 4, weiterhin umfassend einen Schritt des:
Ansammelns eines in der Säurelösung enthaltenen Schwermetallions nach dem Schritt der Extraktion mit Säure aus der Säurelösung.

6. Verfahren nach einem der Ansprüche 1 bis 5, umfassend den Schritt des:
Ansammelns der Borverbindung oder der Phosphorverbindung aus der Säurelösung nach dem Extraktionsschritt durch Abscheidung der Borverbindung oder der Phosphorverbindung.

7. Verfahren nach Anspruch 6, wobei die Borverbindung oder die Phosphorverbindung durch Abscheidung angesammelt wird.

## Revendications

1. Procédé de séparation de métal lourd du verre, comprenant :
une étape de séparation de phase de réduction pour fusion de verre contenant un oxyde de métal lourd et de la silice, avec un agent de réduction et un réactif de séparation de phase qui est une source de bore ou une source de phosphore, réduisant ainsi l'oxyde de métal lourd et formant une phase vitreuse comprenant une phase siliceuse et une phase secondaire ayant une solubilité élevée relativement à une solution acide comparativement à la phase siliceuse ;
une étape de collecte de métal lourd pour séparer et recueillir un métal lourd obtenu par réduction de l'oxyde de métal lourd à partir de la phase vitreuse ; et
une étape d'extraction d'acide pour dissoudre la phase secondaire avec un métal lourd résiduel dans une solution acide en permettant à la phase vitreuse d'entrer en contact avec la solution acide.

2. Procédé selon la revendication 1, le métal lourd étant au moins un métal sélectionné parmi le groupe se composant de : plomb, cadmium, chrome, arsenic, sélénium, zinc, cuivre, fer, manganèse et nickel.

3. Procédé selon l'une quelconque des revendications 1 ou 2, l'agent réducteur étant le carbone.

4. Procédé selon l'une quelconque des revendications 1 à 3, la fonte étant effectuée en présence d'au moins un parmi : métal alcalin et métal alcalino-terreux.

5. Procédé selon l'une quelconque des revendications 1 à 4, comprenant en outre une étape de :
collecter un ion de métal lourd contenu dans la solution acide après l'étape d'extraction d'acide de la solution acide.

6. Procédé selon l'une quelconque des revendications 1 à 5, comprenant l'étape de :
recueillir le composé de bore ou le composé de phosphore de la solution acide après l'étape d'extraction par précipitation du composé de bore ou du composé de phosphore.

7. Procédé selon la revendication 6, le composé de bore ou le composé de phosphore étant recueilli par précipitation.
